# EUROPÄISCHE PATENTSCHRIFT

(11) **EP 0 972 128 B1**
(45) Veröffentlichungstag und Bekanntmachung des Hinweises auf die Patenterteilung: **27.11.2002**
(21) Anmeldenummer: 98925402.4
(22) Anmeldetag: 16.03.1998
(51) Int. Cl.: F01D 5/14, F04D 29/68, F15D 1/12

(54) **OBERFLÄCHENSTRUKTUR FÜR DIE WAND EINES STRÖMUNGSKANALS ODER EINER TURBINENSCHAUFEL**
SURFACE STRUCTURE FOR THE WALL OF A FLOW CHANNEL OR A TURBINE BLADE
STRUCTURE SUPERFICIELLE POUR LA PAROI D'UN CANAL D'ECOULEMENT OU D'UNE AUBE DE TURBINE

(30) Priorität: 01.04.1997 DE 19713402; 21.04.1997 DE 19716726
(43) Veröffentlichungstag der Anmeldung: 19.01.2000
(73) Patentinhaber: SIEMENS AKTIENGESELLSCHAFT, 80333 München (DE)
(72) Erfinder: MÜLLER, Karl-Heinrich, D-47495 Rheinberg (DE); ULM, Wilfried, D-45478 Mülheim an der Ruhr (DE); BELL, Ralf, D-47647 Kerken (DE); SIMON, Volker, D-45470 Mülheim an der Ruhr (DE)
(86) Internationale Anmeldenummer: DE9800788
(87) Internationale Veröffentlichungsnummer: WO98044240

(56) Entgegenhaltungen:
- CH-A- 229 266
- DE-A- 1 428 110
- DE-A- 1 937 395
- DE-A- 2 135 287
- DE-A- 4 319 628
- DE-C- 19 650 439
- GB-A- 840 543
- US-A- 3 039 736
- US-A- 3 481 531
- US-A- 4 720 239

## Beschreibung

Die Erfindung betrifft eine Dampfturbine mit einem Strömungskanal und darin angeordneten Schaufeln sowie eine Schaufel für eine Dampfturbine.

In der DE 195 46 008 A1 ist eine Turbinenschaufel für den Einsatz im Naßdampfbereich von Vorend- und Endstufen von Turbinen beschrieben. Eine solche Turbinenschaufel unterliegt einem Erosionsverschleiß durch aufschlagende Wassertröpfchen. Dieser Erosionsverschleiß wird dadurch reduziert, daß das Schaufelblatt der Turbinenschaufel im Bereich seiner Eintrittskante und dem Bereich seines Schaufelrückens oder in mindestens einem Teilbereich davon eine Oberflächenrauhigkeit aufweist, die gegenüber der Oberflächenrauhigkeit der Vorderseite des Schaufelblatts deutlich verstärkt ist. Durch diese Oberflächenrauhigkeit wird ein Wasserfilm an der Oberfläche der Turbinenschaufel gehalten. Dieser Wasserfilm vermindert die erodierende Wirkung von aufschlagenden Wassertröpfchen.

In der DE 36 09 541 C2 wird die Verminderung eines Strömungswiderstands eines turbulent überströmten Körpers behandelt. Die Widerstandsverminderung wird durch Herabsetzung der turbulenten Wandschubspannung erreicht. Dafür ist die Oberfläche des Körpers mit Rippen in einer Vielzahl von Rippenstaffeln versehen. Die Rippen sind seitlich zu einer Strömungsrichtung gegeneinander versetzt angeordnet und weisen kurze Erstrekkungen in der Strömungsrichtung auf. Konkret offenbart die DE 36 09 541 C2 eine solche Oberflächenstruktur zur Verminderung des Strömungswiderstands einer Tragfläche eines Flugzeugs.

In der DE 43 19 628 A1 wird eine Strukturierung von flüssigkeitsberührten Oberflächen von Strömungsmaschinen behandelt. Durch Anbringung einer Rillenstruktur werden die Strömungsverluste minimiert. Hierbei wird den speziellen Verhältnissen von Flüssigkeitspumpen Rechnung getragen.

Die DE G 90 13 099 betrifft einen Rotor zur Energieaufnahme aus einem strömenden Medium bzw. zur Energieabgabe an ein strömendes Medium bestehend aus einer Nabe und mindestens einem Rotorblatt. Eine Steigerung des Wirkungsgrads des Rotors wird dadurch erreicht, daß ein Rotorblatt des Rotors eine gewellte Form aufweist. Zusätzlich zur zwingend erforderlichen gewellten Form kann ein solches Rotorblatt auch vollständig mit einer Riffelung überzogen sein.

In der US-PS 3,481,531 ist ein Laufrad für einen Zentrifugalkompressor, insbesondere für eine Gasturbine, beschrieben. Das Laufrad weist sich radial nach außen erstreckende Flügel auf, zwischen denen eine Laufradwand liegt. Die Laufradwand ist mit sich radial nach außen erstreckenden Rillen versehen, so daß eine an der Wand anhaftende Grenzschicht von Gas aufgebrochen und damit Energieverluste minimiert werden.

Die US-PS 4,023,350 zeigt eine Vorrichtung, die einen Druckverlust in einer Gasturbine verringert. Die Vorrichtung besteht aus einer Kette von Vorsprüngen, die sich zwischen zwei benachbarten Schaufeln eines Schaufelkranzes der Gasturbine erstreckt. Diese Kette von Vorsprüngen dient einer Wirbelerzeugung, wodurch eine Grenzschichtdicke und damit Verluste aufgrund von Querströmungen verringert werden.

In den VDI-Berichten Nr. 1109 von 1994 schildern Jetter und Rieß auf Seite 241 in dem Artikel "Strömungstechnische Eigenschaften von Turbinenschaufelprofilen unterschiedlicher Fertigungsqualitäten" den Einfluß von Oberflächenrauhigkeiten auf den Wirkungsgrad von Turbinenschaufelprofilen. Es wird ausgeführt, daß Oberflächenrauhigkeiten, wie z.B. Fräsrillen, einen Einfluß auf einen Profilverlust haben, dieser Einfluß aber aufgrund der Bedeutung anderer Parameter bisher nicht genau quantifiziert werden kann.

Eine Dampfturbine geht hervor aus dem Buch "Strömungsmaschinen" von Klaus Menny, B.G. Teubner Stuttgart, 1995. Darin wird ausgeführt, daß unter der Sammelbezeichnung "Strömungsmaschinen", Wasserturbinen, Dampf- und Gasturbinen, Windräder, Kreiselpumpen und Kreiselverdichter sowie Propeller zusammengefaßt sind, Allen diesen Maschinen ist gemeinsam, daß sie dem Zweck dienen, einem Aktionsfluid Energie zu entziehen, um damit eine andere Maschine anzutreiben, oderumgekehrt, einem Aktionsfluid Energie zuzuführen, um dessen Druck zu erhöhen. Am Beispiel einer einfachen Turbine wird die Funktionsweise einer Strömungsmaschine erläutert: Das Aktionsfluid tritt in die Maschine ein und fließt zunächst durch einen Schaufelkranz feststehender Leitschaufeln. Dabei erhöht sich die Geschwindigkeit und damit die kinetische Energie des Aktionsfluids. Sein Druck und damit seine potentielle Energie nimmt ab. Zugleich entsteht durch die Form der Leitschaufeln eine Geschwindigkeitskomponente in der Umfangsrichtung eines dem Leitschaufelkranz nachgeschalteten Laufschaufelkranzes. Über den Laufschaufelkranz gibt das Aktionsfluid seine kinetische Energie an den Läufer ab, mit dem der Laufschaufelkranz verbunden ist, indem die Richtung und oft auch der Betrag der Geschwindigkeit des Aktionsfluides beim Umströmen der Laufschaufeln verhindert wird. Der Laufschaufelkranz wird in eine Drehbewegung versetzt. Das Aktionsfluid tritt mit vermindertem Energiegehalt aus der Maschine aus. Das Verhältnis von aus der Turbine gewonnener mechanischer Energie und dem Aktionsfluid entzogener Energie kennzeichnet den Wirkungsgrad der Turbine.

Aus der CH-A-229 266 ist es bekannt, bei Turbomaschinen, deren Schaufelblattflächen am Schaufelfuß mit einer Abrundung in die Grundfläche übergehen, in die Grundfläche des Schaufelkanals zwischen den Schaufeln eine Vertiefung auszubilden. Durch diese Vertiefung wird der Fließweg einer Grenzschicht verlängert und der Druckgradient geschwächt, so daß der Abfluß der Grenzschicht vermindert wird. Dies ermöglicht eine wesentliche Verbesserung der Strömungsverhältnisse.

Aus der US-A-47 20 239 ist es bekannt, auf wenigstens einigen abstromseitigen Oberflächen von Turbinenschaufeln Nuten auszubilden, welche im wesentlichen parallel (0°) zur Hauptflußrichtung verlaufen. Dadurch werden zwischen Statorschaufeln und abstromseitigen Rotorschaufeln auftretende Druckwellen gestört.

Aufgabe der Erfindung ist es, eine Dampfturbine mit einem hohen Wirkungsgrad anzugeben. Weitere Aufgabe der Erfindung ist die Angabe einer Schaufel für eine Dampfturbine, mit der für die Dampfturbine ein hoher Wirkungsgrad erzielt wird.

Erfindungsgemäß wird die auf die Angabe einer Dampfturbine gerichtete Aufgabe gelöst durch eine Dampfturbine, umfassend mit den Merkmalen des Patentanspruches 1.

In einer solchen Dampfturbine ist eine Durchströmung des Strömungskanals mit einem Aktionsfluid entlang einer, lokal unterschiedlichen, Hauptströmungsrichtung durch die auf die Kanalwand aufgebrachte Rillenstruktur gezielt beeinflußbar. Die Kanalwand muß dabei keine zusammenhängende Fläche sein. Vorzugsweise ist die Kanalwand aus einer Innenwand und einer Außenwand eines ringförmigen Strömungskanals zusammengesetzt. Die Beeinflussung der Durchströmung betrifft insbesondere quer zur Hauptströmungsrichtung des Aktionsfluids gerichtete Querströmungen, z.B. Wirbel, die durch einen, von der Rillenstruktur verursachten, erhöhten Strömungswiderstand gedämpft werden. Da solche Querströmungen eine Verminderung des Wirkungsgrades bedingen können, kann die Dämpfung solcher Querströmungen zu einer Erhöhung des Wirkungsgrades der Dampfturbine beitragen.

Bevorzugt ist jede Schaufel in einem Schaufelkranz angeordnet, wobei zwischen zwei zueinander in einem Schaufelkranz benachbarten Schaufeln eine Abstandsfläche liegt, die Teil der Kanalwand ist. Auf der Abstandsfläche erstreckt sich die Rillenstruktur mit den Rillenkämmen. Zwischen zwei benachbarten Schaufeln strömt das Aktionsfluid entlang der dort durch die Schaufeln festgelegten Hauptströmungsrichtung. Die Abstandsfläche kann sich in der Hauptströmungsrichtung über eine Verbindungslinie zwischen Endpunkten benachbarter Schaufeln hinaus erstrecken. Der Ausdruck "dazwischen liegt" soll eher einer Kennzeichnung der Lage der Abstandsfläche dienen, als einer strengen Festlegung ihrer Ausdehnung längs der Hauptströmungsrichtung. Die Abstandsflächen eines Schaufelkranzes bieten eine besonders wirkungsvolle Möglichkeit, eventuell auftretende Querströmungen durch eine auf diesen Flächen aufgebrachte Rillenstruktur zu dämpfen. Unter einem Schaufelkranz ist z. B. eine Anordnung von Schaufeln zu verstehen, bei der die Schaufeln zwischen einer inneren und einer äußeren, jeweils ringförmigen Begrenzung angeordnet sind oder bei der die Schaufeln nur auf einer Seite befestigt sind, z. B. auf einem Läufer einer Turbine.

Bevorzugtermaßen weist jede Schaufel ein Schaufelblatt mit einer an die Abstandsfläche grenzenden Schaufelblattkontur auf, wobei jedem sich auf der Abstandsfläche erstreckenden Rillenkamm eine nächstliegende Schaufelblattkontur zugeordnet ist. Zu dieser Schaufelblattkontur ist der Rillenkamm vorzugsweise ungefähr gleichlaufend gerichtet. Damit ist die Rillenstruktur ungefähr entlang der Hauptströmungsrichtung eines Aktionsfluides und damit ungefähr senkrecht zu möglicherweise auftretenden Querströmungen gerichtet. Dies führt zu einem erhöhten Strömungswiderstand senkrecht zur Hauptströmungsrichtung und damit zu einer Dämpfung der Querströmungen.

Weiter bevorzugt ist ein erster Teil der Schaufeln als Laufschaufeln ausgeführt. Bevorzugtermaßen ist ein zweiter Teil der Schaufeln als Leitschaufeln ausgeführt.

Bevorzugt weisen einige der Schaufeln jeweils ein Fußteil auf, mit welchem Fußteil sie in eine umlaufende, für alle diese Schaufeln gemeinsame Nut eines Läufers oder eines Gehäuses eingeschoben sind. Bei Schaufeln eines hierdurch gebildeten Schaufelkranzes stoßen die Fußteile dieser Schaufeln aneinander. Jedes dieser Fußteile weist eine kanalseitige Fußteiloberfläche auf, die einen Teil der Kanalwand bildet. Die Kanalwand kann dadurch mit einer Rillenstruktur versehen werden, daß auf die kanalseitige Fußteiloberfläche, also auf die Fußteile der Schaufeln, die Rillenstruktur aufgebracht wird. Es kann demnach in fertigungstechnisch einfacher Weise auf das Fußteil einer einzelnen Schaufel bereits vor deren Einbau in die Strömungsmaschine eine Rillenstruktur aufgebracht werden.

Weiter bevorzugt ist eine der Schaufeln in eine, nur für eine einzige Schaufel ausgelegte Nut eines Läufers oder eines Gehäuses eingepaßt. Vorzugsweise wird ein ganzer Schaufelkranz durch solche Schaufeln gebildet. In diesem Fall wird die Abstandsfläche im wesentlichen durch die zwischen jeweiligen Nuten benachbarter Schaufeln dieses Schaufelkranzes liegende Oberfläche des Läufers gebildet.

Bevorzugtermaßen ist ein Teil der Schaufeln miteinander in einem Verbund so verbunden, daß jede dieser Schaufeln nur zerstörend aus dem Verbund herauslösbar ist. Vorzugsweise ist dieser Verbund ein Schaufelkranz oder ein Teil eines Schaufelkranzes. Dieser Schaufelkranz oder dieser Teil eines Schaufelkranzes kann z. B. durch Schweißen gefertigt sein oder durch ein Herauserodieren von Schaufeln aus einem kompakten Werkstück oder aus mehreren kompakten Werkstücken, die anschließend zusammengefügt werden.

Bevorzugt beträgt der Abstand benachbarter Rillenkämme zwischen 0,01 mm und 10 mm. Weiter bevorzugt schließen je zwei benachbarte Rillenkämme einen Rillengrund ein und bilden eine Rille, wobei die Rillentiefe jeder Rille gemessen von einer Verbindungslinie zwischen den Rillenkämmen zum tiefsten Punkt des Rillengrundes zwischen 1 µm und 1 mm beträgt.

Bevorzugtermaßen weist jede Schaufel ein Schaufelblatt auf, wobei sich auf zumindest einem Schaufelblatt zumindest bereichsweise eine Schaufelblattrillenstruktur erstreckt. Hierdurch ist eine Durchströmung der Strömungsmaschine mit einem Aktionsfluid auch über eine Rillenstruktur auf den Schaufelblättern der Schaufeln beeinflussbar.

Erfindungsgemäß wird die auf eine Schaufel gerichtete Aufgabe gelöst durch Angabe einer Schaufel für eine Strömungsmaschine, die entlang einer Schaufelachse gerichtet ist und eine Schaufeloberfläche aufweist, mit einem Fußteil, welches ein Befestigungsteil zur Befestigung der Schaufel in der Strömungsmaschine aufweist und mit einem an das Fußteil angrenzenden Schaufelblatt, welches eine Schaufelblattoberfläche mit entlang der Schaufelachse aufeinanderfolgend einem Fußbereich, einem Mittelbereich und einem Kopfbereich aufweist, wobei die Schaufeloberfläche zumindest bereichsweise eine Rillenstruktur mit voneinander beabstandeten Rillenkämmen aufweist, durch die eine Umströmung der Schaufeloberfläche mit einem Aktionsfluid gezielt beeinflußbar ist, wobei sich die Rillenstruktur im Fußbereich und/oder im Kopfbereich erstreckt und der Mittelbereich glatt ist.

Damit wird jeweils in den Randbereichen eines Schaufelblattes eine Umströmung der Schaufel durch die Rillenstruktur beeinflußt. Mit glatt ist hier gemeint, daß die Oberfläche des Mittelbereichs allenfalls Rillen, Rauhigkeiten oder Erhebungen aufweist, die niedrig oder klein gegenüber den Rillen im Fußbereich und/oder im Kopfbereich sind.

Bevorzugt erstreckt sich jeder Rillenkamm in einem Erstrekkungswinkel zu einer Ebene senkrecht zur Schaufelachse, wobei ein erster Erstreckungswinkel eines ersten Rillenkamms und ein zweiter, vom ersten Erstreckungswinkel verschiedener, Erstreckungswinkel eines zweiten Rillenkamms vorgesehen sind.

Durch die Rillenstruktur der Schaufeloberfläche ist eine Umströmung der in einer Strömungsmaschine eingebauten Schaufel so beeinflussbar, daß sich eine Wirkungsgradverbesserung für die Strömungsmaschine ergibt. Insbesondere sind eventuell auftretende Querströmungen mithilfe der Rillenstruktur abschwächbar. Querströmungen sind quer zu einer Hauptströmungsrichtung des Aktionsfluides auftretende Nebenströmungen. Da solche Querströmungen einen Wirkungsgradverlust verursachen können, kann durch ihre Abschwächung der Wirkungsgrad erhöht werden.

Das Fußteil der Schaufel stellt eine an das Schaufelblatt angrenzende Befestigungsvorrichtung dar, über die die Schaufel mit der Strömungsmaschine verbunden werden kann, z. B. mit dem Läufer oder dem Innengehäuse einer Turbine. Dabei können Fußteile mehrerer Schaufeln eines Schaufelrades auch zu einem einzigen, z. B. ein Rad bildenden, Teil zusammengefaßt sein. Die Schaufel kann außerdem auch ein Kopfteil aufweisen, das z.B. zur Abdichtung eines Leckstromes durch einen Spalt zwischen Schaufel und Gehäuse oder Läufer einer Strömungsmaschine geeignet ist.

Mit dem Begriff "Rillenstruktur" ist auch umfaßt, daß in verschiedenen Bereiche der Schaufeloberfläche die Ausbildung der Struktur unterschiedlich sein kann oder daß voneinander getrennte Bereiche der Schaufeloberfläche, unter Umständen unterschiedlich ausgebildete, Rillen aufweisen können. Die Rillen können sich also von Ort zu Ort auf der Schaufeloberfläche z. B. in ihrer Tiefe, Breite, Form oder Erstreckungsrichtung unterscheiden.

Bevorzugt liegt der erste Rillenkamm in einem Bereich des Fußteils oder im Fußbereich, wobei der erste Erstreckungswinkel zwischen 0° und 20° beträgt.

Bevorzugt weist das Fußteil eine Fußteiloberfläche auf, über die sich zumindest teilweise die Rillenstruktur erstreckt. Weiter bevorzugt ist ein entlang der Schaufelachse dem Fußteil gegenüberliegendes Kopfteil mit einer Kopfteiloberfläche vorgesehen, über die sich zumindest teilweise die Rillenstruktur erstreckt, wobei insbesondere der zweite Rillenkamm in der Kopfteiloberfläche liegt. Die Rillenstruktur kann auf der Kopfteiloberfläche eine andere Erstreckungsrichtung aufweisen als in anderen Bereichen der Schaufeloberfläche. Gerade in den Randbereichen einer Schaufel können Querströmungen auftreten, deren Abschwächung eine Wirkungsgradverbesserung bedeuten kann. Indem bevorzugt das Fuß- und/oder Kopfteil eine Rillenstruktur aufweist bzw. aufweisen, können gezielt eventuell auftretende Querströmungen in diesen Bereichen abgeschwächt werden.

Bevorzugt beträgt der Abstand benachbarter Rillenkämme zwischen 0,01 mm und 10 mm. Weiter bevorzugt schließen je zwei benachbarte Rillenkämme einen Rillengrund ein und bilden eine Rille, wobei die Rillentiefe jeder Rille, gemessen von einer Verbindungslinie zwischen den Rillenkämmen zum tiefsten Punkt des Rillengrundes, zwischen 1 um und 1 mm beträgt.

Ausführungsbeispiele der Erfindung werden anhand der Zeichnung näher erläutert. Es zeigen:
- FIG 1: einen Längsschnitt durch eine Dampfturbine,
- FIG 2: einen perspektivisch dargestellten Ausschnitt eines Schaufelkranzes mit einer Rillenstruktur,
- FIG 3: eine Seitenansicht einer Turbinenschaufel und
- FIG 4: einen Querschnitt durch die Turbinenschaufel aus Figur 3.
- FIG 5: eine schematisch dargestellte Rillenstruktur und
- FIG 6: einen Ausschnitt einer Seitenansicht einer Dampfturbinenschaufel mit Fußteil.

Die Bezugszeichen haben in den verschiedenen Figuren die gleiche Bedeutung.

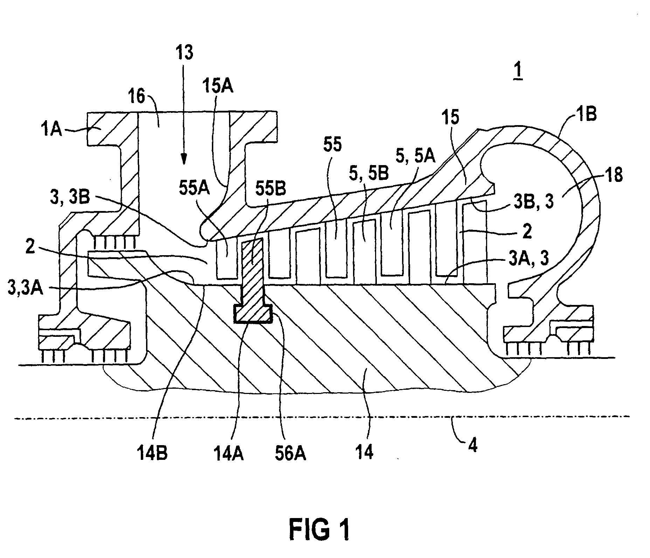

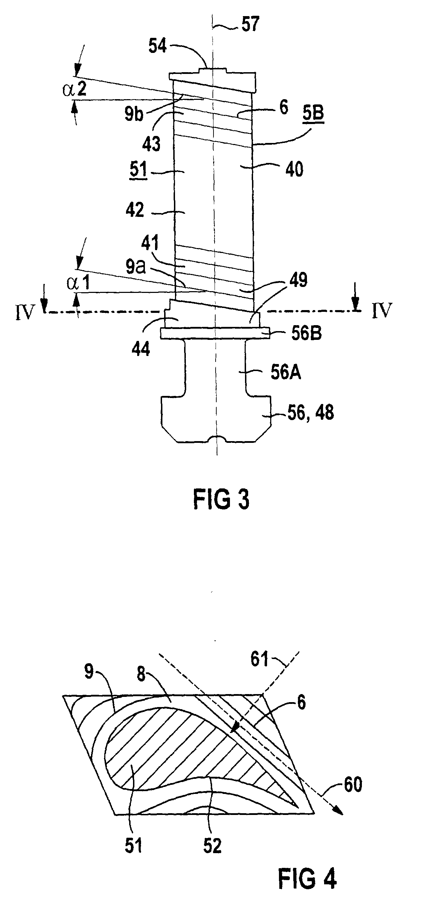

In Figur 1 ist ein Längsschnitt durch eine entlang einer Achse 4 von einer Eintrittsseite 1A zu einer Austrittseite 1B gerichteten Dampfturbine 1 abgebildet. Es ist nur eine Hälfte der zur Achse 4 spiegelsymmetrischen Darstellung gezeigt. Ein Läufer 14 mit einer Oberfläche 14B erstreckt sich entlang der Achse 4 und ist bereichsweise von einem Gehäuse 15 mit einer Innenseite 15A umgeben. Das Gehäuse 15 weist einen im Querschnitt kreisförmigen, zur Achse 4 senkrecht gerichteten Eintrittskanal 16 für eine Dampfzufuhr auf. Das die Dampfturbine 1 antreibende Aktionsfluid ist Dampf 13. Der Eintrittskanal 16 mündet in einen ringförmigen Strömungskanal 2, der sich entlang der Achse 4 von der Eintrittsseite 1A zur Austrittseite 1B erstreckt und durch eine Kanalwand 3 begrenzt wird. Die Kanalwand 3 besteht einerseits aus einer Innenwand 3A, die durch einen Teil der Oberfläche 14B des Läufers 14 gebildet ist. Andererseits besteht die Kanalwand 3 aus einer Außenwand 3B, die durch einen Teil der Innenseite 15A des Gehäuses 15 gebildet ist. Während die Innenwand 3A einen zur Achse 4 koaxialen Zylinder darstellt, bildet die Außenwand 3B einen zur Achse 4 koaxialen Kegelstumpf. Letzterer verbreitert sich von der Eintrittseite 1A zur Austrittseite 1B, so daß der Strömungskanal 2 eine entlang der Achse 4 anwachsende Querschnittsfläche aufweist. Der Strömungskanal 2 mündet in einen Austrittskanal 18, der senkrecht zur Achse 4 und senkrecht zum Eintrittskanal 16 gerichtet ist. Entlang dem Strömungskanal 2 sind jeweils eine Anzahl von Schaufeln 5 in jeweiligen Schaufelkränzen 55 angeordnet. Jede Schaufel 5 ist entlang einer Schaufelachse 57 (s. Fig. 3) gerichtet. Die Schaufelachse 57 jeder Schaufel 5 ist senkrecht zur Achse 4 gerichtet, wobei jede Schaufel 5 gerade so lang ist, daß sie sich über die ganze Höhe des Strömungskanals 2 erstreckt. Es sind Schaufelkränze 55A, 55B mit einerseits Leitschaufeln 5A und andererseits Laufschaufeln 5B vorgesehen, wobei entlang der Achse 4 abwechselnd ein Schaufelkranz 55A mit Leitschaufeln 5A und ein Schaufelkranz 55B mit Laufschaufeln 5B angeordnet ist. Die Leitschaufeln 5A sind am Gehäuse 15 verankert. Die Laufschaufeln 5B sind mit dem Läufer 14 verbunden. An einem Schaufelkranz 55B mit Laufschaufeln 5B ist beispielhaft gezeigt, wie eine Laufschaufel 5B mit einem hammerkopfförmigen Befestigungsteil 56A in eine entsprechend geformte Nut 14A des Läufers 14 eingepaßt ist.

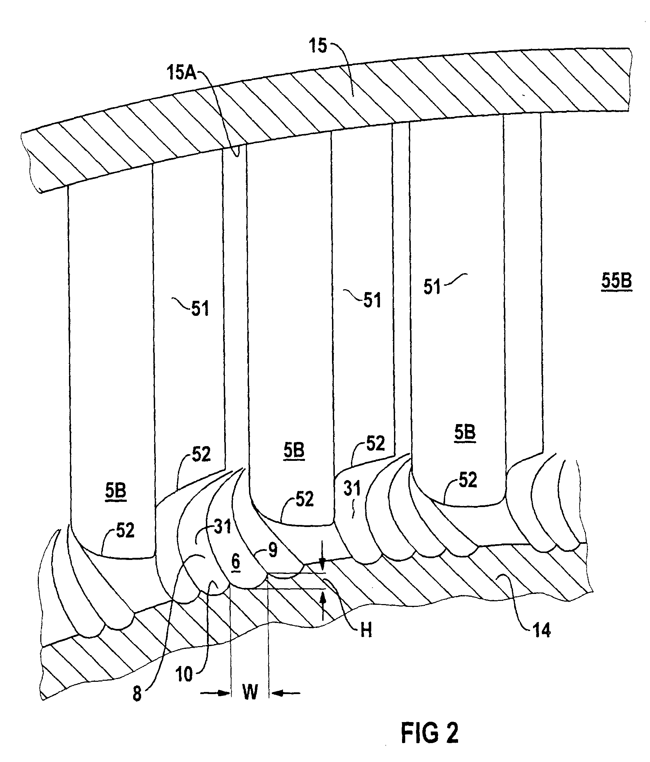

Beim Betrieb einer solchen Dampfturbine 1 strömt ein Aktionsfluid, hier Dampf 13, über den Eintrittskanal 16 entlang einer, sich lokal ändernden Hauptströmungsrichtung 60 (s. Fig. 4) durch den Strömungskanal 2 und tritt über den Austrittskanal 18 wieder aus der Dampfturbine 1 aus. Im Strömungskanal 2 wird der Dampf 13 durch die Leitschaufeln 5A auf die Laufschaufeln 5B gelenkt. Die durch den Dampf 13 auf die Laufschaufeln 5B ausgeübten Kräfte versetzen den Läufer 14 in eine Drehbewegung. Kinetische Energie des Dampfes 13 wird also in kinetische Energie des Läufers 14 umgewandelt. Die Drehbewegung des Läufers 14 kann z.B. zur Erzeugung elektrischer Energie in einem nicht dargestellten Generator genutzt werden. Im Strömungskanal 2 können zusätzlich zur Hauptströmungsrichtung 60 des Dampfes 13 quer zur Hauptströmungsrichtung 60 gerichtete Querströmungen 61 (s. Fig. 4) auftreten. Solche Querströmungen 61 bedeuten in der Regel einen Energieverlust des Dampfes 13, der nicht in mechanische Energie des Läufers 14 umgesetzt wird, was demnach eine Verringerung des Wirkungsgrades bedeutet. Solchen Querströmungen 61 wird durch eine auf der Kanalwand 3 aufgebrachte Rillenstruktur 6 entgegengewirkt, die in Figur 1 nicht dargestellt und in Figur 2 näher erläutert ist.

In Figur 2 ist schematisch ein Ausschnitt aus einem Schaufelkranz 55B mit Laufschaufeln 5B dargestellt. Die Laufschaufeln 5B sind entlang des Umfangs des Läufers 14 angeordnet. Jede Laufschaufel 5B ist mit dem Läufer 14 verbunden. Jede Laufschaufel 5B weist ein Schaufelblatt 51 auf. Jedes Schaufelblatt 51 grenzt mit einer Schaufelblattkontur 52 an den Läufer 14. Zwischen je zwei benachbarten Laufschaufeln 5B befindet sich eine Abstandsfläche 31. Diese ist von den Schaufelblattkonturen 52 dieser beiden Laufschaufeln 5B entlang einer Hauptströmungsrichtung 60 des den Schaufelkranz 55B umströmenden Dampfes 13 begrenzt. Die Abstandsfläche 31 erstreckt sich in der Hauptströmungsrichtung 60 über einen ausschließlich zwischen den beiden Laufschaufeln 5B liegenden Bereich hinaus. Jede Laufschaufel 5B grenzt mit ihrem, dem Läufer 14 entgegengesetzten, Ende an die Innenseite 15A des Gehäuses 15, wobei die Laufschaufel 5B das Gehäuse 15 aber nicht berührt, also ein Spalt verbleibt. Eine geeignete, nicht dargestellte Abdichtung, z. B. eine ineinander greifende Verzahnung von Laufschaufel 5B und Gehäuse 15, dichtet diesen Spalt weitgehend ab. Auf jeder Abstandsfläche 31 erstreckt sich eine Rillenstruktur 6 mit Rillenkämmen 9. Je zwei benachbarte Rillenkämme 9 schließen einen Rillengrund 10 ein und bilden eine Rille 8. Jede Rille 8 weist einen Abstand w von Rillenkamm 9 zu Rillenkamm 9 auf sowie eine Rillentiefe h gemessen vom Rillengrund 10 der Rille 8 bis zu einer Verbindungslinie zwischen ihren Rillenkämmen 9. Die Rillen 8 der Rillenstruktur 6 können aber je nach Strömungsverhältnissen auch unterschiedliche Breiten und Höhen oder auch Formen aufweisen. Jeder Rillenkamm 9 ist gleichlaufend zu einer, dem Rillenkamm 9 nächstliegenden Schaufelblattkontur 52 gerichtet. Eine solche Rillenstruktur 6 führt ein den Schaufelkranz 55B durchströmendes Aktionsfluid entlang der Hauptströmungsrichtung 60 (s. Fig. 4) und schwächt eine eventuell auftretende, quer zu dieser Hauptströmungsrichtung 60 gerichtete Querströmung 61 (s. Fig. 4), z.B. einen Wirbel, durch einen für diese Querströmung 61 erhöhten Strömungswiderstand ab. Eine solche Abschwächung bedeutet, wie oben ausgeführt, in der Regel eine Erhöhung des Wirkungsgrades.

In Figur 3 ist eine Seitenansicht einer Laufschaufel 5B gezeigt. Die Laufschaufel 5B ist entlang einer Schaufelachse 57 gerichtet. Entlang der Schaufelachse 57 erstreckt sich ein Fußteil 56 mit einem hammerkopfförmigen Befestigungsteil 56A und einer quer zur Schaufelachse 57 gerichteten Fußteilplatte 56B, ein Schaufelblatt 51 und ein Kopfteil 54. Auf die Oberfläche des Schaufelblattes 51 ist eine Rillenstruktur 6 aufgebracht. Die Rillenstruktur 6 erstreckt sich auf der Schaufelblattoberfläche 51a angrenzend an das Fußteil 56 im Fußbereich 41 und angrenzend an das Kopfteil 54 im Kopfbereich 43. Der Mittelbereich 42 der Schaufelblattoberfläche 51a ist glatt. Bei einer Umströmung der Schaufel 5 mit einem Aktionsfluid 11 wird gezielt nur die Strömung in den Randbereichen des Schaufelblatts 51 durch die Rillenstruktur 6 beeinflußt. Da gerade in solchen Randbereichen Querströmungen auftreten können, ist so eine Dämpfung dieser Querströmungen gezielt in den Randbereichen möglich.

Die Laufschaufel 5B wird mit ihrem Befestigungsteil 56A in eine Nut 14A (s. Fig. 1) eingeschoben. Aus einer Vielzahl von baugleichen Laufschaufeln 5B wird so ein Schaufelkranz 55B von direkt mit ihren jeweiligen Fußteilen 56 aneinandergrenzenden Laufschaufeln 5B gebildet. Die Fußteilplatten 56B der Laufschaufeln 5B bilden einen Teil der Kanalwand 3. Auf die Fußteilplatten 56B ist eine Rillenstruktur 6 aufgebracht. Dies wird in dem in Figur 4 gezeigten Querschnitt durch die Laufschaufel 5B deutlich. Auf der trapezförmigen Fußteilplatte 56B erstreckt sich die Rillenstruktur 6 mit Rillenkämmen 9. Der Umriß des Querschnittsprofils stellt eine Schaufelblattkontur 52 dar, wobei die Rillenkämme 9 dem Verlauf dieser Schaufelblattkontur 52 folgen.

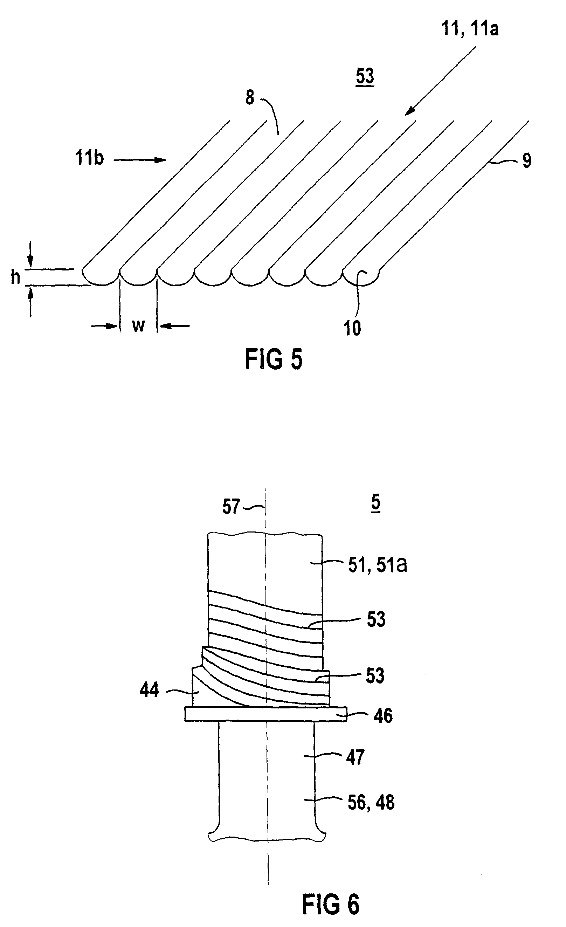

In Figur 5 ist schematisch eine Rillenstruktur 6 abgebildet. Auf einer Fläche sind direkt aneinandergrenzend im Querschnitt etwa U-förmige Rillen 8 parallel zueinander angeordnet. Die Rillen 8 werden begrenzt durch Rillenkämme 9, die einen Rillengrund 10 einschließen. In diesem Beispiel ist der Abstand w von einem Rillenkamm 9 zu einem benachbarten Rillenkamm 9 immer gleich. Die Höhe h vom tiefsten Punkt eines Rillengrundes 10 zu einer Verbindungslinie zwischen den begrenzenden Rillenkämmen 9 ist ebenfalls für jede Rille gleich. Die Rillenstruktur 6 ist parallel zu einer Umströmung durch ein Aktionsfluid 11 ausgerichtet. Zusätzlich zur einer Hauptströmungsrichtung 11a des Aktionsfluides 11 kann eine Querströmung 11b auftreten. Diese erfährt durch die quer gerichtete Rillenstruktur 6 einen erhöhten Strömungswiderstand und kann so gedämpft werden, was zu einer Verbesserung des Wirkungsgrades führen kann.

In Figur 6 ist ein Ausschnitt einer Seitenansicht einer Dampfturbinenschaufel 5 dargestellt. In dieser Ausführungsform erstreckt sich die Rillenstruktur 6 auch auf einen Fußteilübergangsbereich 44 der Fußteiloberfläche des Fußteiles 56. Damit wird eine Umströmung der Schaufel auch über die Fußteiloberfläche beeinflußbar. Eine Rillenstruktur 6 kann direkt bei der Fertigung der Schaufel vorgesehen werden, sie kann aber auch nachträglich aufgebracht werden.

## Patentansprüche

1. Dampfturbine (1), umfassend einen entlang einer Achse (4) gerichteten Strömungskanal (2) mit einer Kanalwand (3) und mit im Strömungskanal (2) angeordneten Schaufeln (5),wobei jede Schaufel (5) in einem Schaufelkranz (55) angeordnet ist, wobei zwischen zwei zueinander in einem Schaufelkranz (55) benachbarten Schaufeln (5) eine Abstandsfläche (31) liegt, die Teil der Kanalwand (3) ist, wobei sich zumindest bereichsweise auf Abstandsfläche (31) eine Rillenstruktur (6) mit Rillenkämmen (9) erstreckt,
**dadurch gekennzeichnet, daß** jede Schaufel (5) ein Schaufelblatt (51) aufweist, wobei sich auf zumindest einem Schaufelblatt (51) zumindest bereichsweise eine Rillenstruktur (6) erstreckt.

2. Dampfturbine (1) nach Anspruch 1, **dadurch gekennzeichnet, daß** die Kanalwand (3) zumindest bereichsweise eine Rillenstruktur (6) mit voneinander beabstandeten Rillenkämmen (9) aufweist.

3. Dampfturbine (1) nach Anspruch 2, **dadurch gekennzeichnet, daß** jede Schaufel (5) ein Schaufelblatt (51) mit einer an die Abstandsfläche (31) grenzenden Schaufelblattkontur (52) aufweist, wobei jedem sich auf der Abstandsfläche (31) erstreckenden Rillenkamm (9) eine nächstliegende Schaufelblattkontur (52) zugeordnet ist, zu der der Rillenkamm (9) ungefähr gleichlaufend gerichtet ist.

4. Dampfturbine (1) nach nach einem der vorhergehenden Ansprüche, **dadurch gekennzeichnet, daß** ein erster Teil der Schaufeln (5) als Laufschaufeln (SB) ausgeführt ist.

5. Dampfturbine (1) nach einem der vorhergehenden Ansprüche, **dadurch gekennzeichnet, daß** ein zweiter Teil der Schaufeln (5) als Leitschaufeln (5A) ausgeführt ist.

6. Dampfturbine (1) nach einem der vorhergehenden Ansprüche, **dadurch gekennzeichnet, daß** einige der Schaufeln (5) jeweils ein Fußteil (56) aufweisen, mit welchem Fußteil (56) sie in eine umlaufende, für alle diese Schaufeln (5) gemeinsame Nut (14A) eines Läufers (14) oder eines Gehäuses (15) eingeschoben sind, wobei diese Schaufeln (5) mit ihren Fußteilen (56). aneinanderstoßen.

7. Dampfturbine (1) nach einem der vorhergehenden Ansprüche, **dadurch gekennzeichnet, daß** eine der Schaufeln (5) in eine, nur für eine einzige Schaufel (5) ausgelegte, Nut (14A) eines Läufers (14) oder eines Gehäuses (15) eingepaßt ist.

8. Dampfturbine (1) nach einem der vorhergehenden Ansprüche, **dadurch gekennzeichnet, daß** ein Teil der Schaufeln (5) miteinander zu einem Verbund so verbunden ist, insbesondere durch Schweißen oder durch ein Herauserodieren dieser Schaufeln (5) aus einem kompakten Werkstück, daß jede dieser Schaufeln (5) nur zerstörend aus dem Verbund herauslösbar ist.

9. Dampfturbine (1) nach einem der vorhergehenden Ansprüche, **dadurch gekennzeichnet, daß** der Abstand (w) benachbarter Rillenkämme (9) zwischen 0,01 mm und 10 mm beträgt.

10. Dampfturbine (1) nach einem der vorhergehenden Ansprüche, **dadurch gekennzeichnet, daß** je zwei benachbarte Rillenkämme (9) einen Rillengrund (10) einschließen und eine Rille (8) bilden, wobei die Rillentiefe (h) jeder Rille (8), gemessen von einer Verbindungslinie zwischen den Rillenkämmen (9) zum tiefsten Punkt des Rillengrundes (10), zwischen 1 gm und 1 mm beträgt.

11. Entlang einer Schaufelachse (57) gerichtete Schaufel (5) für eine Dampfturbine, die eine Schaufeloberfläche (49) aufweist, mit einem Fußteil (56), welches ein Befestigungsteil (56A) zur Befestigung in der Dampfturbine aufweist und mit einem an das Fußteil (56) angrenzenden Schaufelblatt (51), welches eine Schaufelblattoberfläche (51A) mit entlang der Schaufelachse (57) aufeinanderfolgend einem Fußbereich (41), einem Mittelbereich (42) und einem Kopfbereich (43) aufweist, **dadurch gekennzeichnet, daß** die Schaufeloberfläche (49) eine Rillenstruktur (6) mit voneinander beabstandeten Rillenkämmen (9) aufweist, durch die eine Umströmung der Schaufeloberfläche (49) mit einem Aktionsfluid (11) gezielt beeinflußbar ist, wobei sich die Rillenstruktur im Fußbereich (41) und im Kopfbereich (43) erstreckt und der Mittelbereich (42) glatt ist.

12. Schaufel (5) nach Anspruch 11, **dadurch gekennzeichnet, daß** sich jeder Rillenkamm (9) in einem Erstreckungswinkel (α) zu einer Ebene senkrecht zur Schaufelachse (57) erstreckt, wobei ein erster Rillenkamm (9a) mit einem ersten Erstreckungswinkel (α1) und ein zweiter Rillenkamm (9b) mit einem zweiten Erstreckungswinkel (α2) vorgesehen sind.

13. Schaufel (5) nach Anspruch 12, **dadurch gekennzeichnet,** daß der erste Rillenkamm (9a) in einem Bereich des Fußteils (56) oder im Fußbereich (41) liegt und der erste Erstreckungswinkel (α1) zwischen 0° und 20° beträgt.

14. Schaufel (5) nach Anspruch 12 oder 13, **dadurch gekennzeichnet, daß** der zweite Rillenkamm (9b) im Kopfbereich (43) liegt, wobei der zweite Erstreckungswinkel (α1) zwischen 20° und 60° beträgt.

15. Schaufel (5) nach einem der Ansprüche 11 bis 14, **dadurch gekennzeichnet, daß** das Fußteil (56) eine Fußteiloberfläche aufweist, über die sich die Rillen- struktur (6) zumindest teilweise erstreckt.

16. Schaufel (1) nach einem der Ansprüche 11 bis 15, **dadurch gekennzeichnet, daß** ein entlang der Schaufelachse (57) dem Fußteil (56) gegenüberliegendes Kopfteil (54) mit einer Kopfteiloberfläche vorgesehen ist, über die sich die Rillenstruktur (6) zumindest teilweise erstreckt, wobei insbesondere der zweite Rillenkamm (9b) in der Kopfteiloberfläche liegt.

17. Schaufel (5) nach einem der Ansprüche 11 bis 16, **dadurch gekennzeichnet, daß** der Abstand (w) benachbarter Rillenkämme (9) zwischen 0,01 mm und 10 mm beträgt.

18. Schaufel (5) nach einem der Ansprüche 11 bis 17, **dadurch gekennzeichnet, daß** je zwei benachbarte Rillenkamme (9) einen Rillengrund (10) einschließen und eine Rille (8) bilden, wobei die Rillentiefe jeder Rille gemessen von einer Verbindungslinie zwischen den Rillenkämmen (9) zum tiefsten Punkt des Rillengrundes (10), zwischen 1 gm und 1 mm beträgt.

## Claims

1. Steam turbine (1), comprising a flow duct (2) directed along an axis (4), with a duct wall (3) and with blades (5) arranged in the flow duct (2), each blade (5) being arranged in a blade ring (55), a clearance surface (31), which is part of the duct wall (3), lying between two blades (5) adjacent to one another in a blade ring (55), a grooved structure (6) with groove ridges (9) extending at least in regions on the clearance surface (31), **characterized in that** each blade (5) has a blade leaf (51), a grooved structure (6) extending at least in regions on at least one blade leaf (51).

2. Steam turbine (1) according to Claim 1, **characterized in that** the duct wall (3) has at least in regions a grooved structure (6) with groove ridges (9) spaced from one another.

3. Steam turbine (1) according to Claim 2, **characterized in that** each blade (5) has a blade leaf (51) with a blade-leaf contour (52) contiguous to the clearance surface (31), each groove ridge (9) which extends on the clearance surface (31) being assigned a nearest blade-leaf contour (52), towards which the groove ridge (9) faces so as to run in approximately the same direction.

4. Steam turbine (1) according to one of the preceding claims, **characterized in that** a first part of the blades (5) is designed as moving blades (SB).

5. Steam turbine (1) according to one of the preceding claims, **characterized in that** a second part of the blades (5) is designed as guide vanes (5A).

6. Steam turbine (1) according to one of the preceding claims, **characterized in that** some of the blades (5) each have a root part (56), with which root part (56) they are pushed into a peripheral slot (14A), common to all these blades (5), of a rotor (14) or of a casing (15), these blades (5) butting on one another with their root parts (56).

7. Steam turbine (1) according to one of the preceding claims, **characterized in that** one of the blades (5) is fitted into a slot (14A), designed only for a single blade (5), of a rotor (14) or of a casing (15).

8. Steam turbine (1) according to one of the preceding claims, **characterized in that** some of the blades (5) are connected to one another to form a composite structure, in particular by welding or by these blades (5) being eroded out of a compact workpiece, in such a way that each of these blades (5) can be released only destructively from the composite structure.

9. Steam turbine (1) according to one of the preceding claims, **characterized in that** the spacing (w) between adjacent groove ridges (9) is between 0.01 mm and 10 mm.

10. Steam turbine (1) according to one of the preceding claims, **characterized in that** in each case two adjacent groove ridges (9) enclose a groove bottom (10) and form a groove (8), the groove depth (h) of each groove (8), measured from a connecting line between the groove ridges (9) to the lowest point of the groove bottom (10), being between 1 gm and 1 mm.

11. Blade (5) for a steam turbine, which blade is directed along a blade axis (57) and has a blade surface (49), with a root part (56) which has a fastening part (56A) for fastening in the steam turbine, and with a blade leaf (51) which is contiguous to the root part (56) and which has a blade-leaf surface (51A) with, successively along the blade axis (57), a root region (41), a middle region (42) and a head region (43), **characterized in that** the blade surface (49) has a grooved structure (6) with groove ridges (9) which are spaced from one another and which can specifically influence a flow of an action fluid (11) around the blade surface (49), the grooved structure extending in the root region (41) and in the head region (43), and the middle region (42) being smooth.

12. Blade (5) according to Claim 11, **characterized in that** each groove ridge (9) extends at an angle of extent (α) to a plane perpendicular to the blade axis (57), a first groove ridge (9a) with a first angle of extent (α1) and a second groove ridge (9b) with a second angle of extent (α2) being provided.

13. Blade (5) according to Claim 12, **characterized in that** the first groove ridge (9a) lies in a region of the root part (56) or in the root region (41), and the first angle of extent (α1) is between 0° and 20°.

14. Blade (5) according to Claim 12 or 13, **characterized in that** the second groove ridge (9b) lies in the head region (43), the second angle of extent (α2) being between 20° and 60°.

15. Blade (5) according to one of Claims 11 to 14, **characterized in that** the root part (56) has a root-part surface, over which the grooved structure (6) extends at least partially.

16. Blade (1) according to one of Claims 11 to 15, **characterized in that** a head part (54) located opposite the root part (56) along the blade axis (57) and having a head-part surface, over which the grooved structure (6) extends at least partially, is provided, in particular the second groove ridge (9b) lying in the head-part surface.

17. Blade (5) according to one of Claims 11 to 16, **characterized in that** the spacing (w) between adjacent groove ridges (9) is between 0.01 mm and 10 mm.

18. Blade (5) according to one of Claims 11 to 17, **characterized in that** in each case two adjacent groove ridges (9) enclose a groove bottom (10) and form a groove (8), the groove depth of each groove, measured from a connecting line between the groove ridges (9) to the lowest point of the groove bottom (10), being between 1 gm and 1 mm.

## Revendications

1. Turbine (1) à vapeur, comprenant un canal (2) d'écoulement dirigé le long d'un axe (4) comprenant une paroi (3) de canal et des aubes (5) disposées dans le canal (2) d'écoulement, chaque aube (5) étant disposée dans une couronne (55) d'aubes, une surface (31) d'intervalle, qui fait partie de la paroi (3) du canal, se trouvant entre deux aubes (5) voisines l'une de l'autre dans une couronne (55) d'aubes, une structure (6) rainurée ayant des peignes (6) formant des rainures s'étendant au moins par endroits sur la surface (31) d'intervalle,
**caractérisée en ce que** chaque aube (5) a une pale (51) d'aube, une structure (6) rainurée s'étendant au moins par endroits sur au moins une pale (51) d'aube.

2. Turbine (1) à vapeur suivant la revendication 1, **caractérisée en ce que** la paroi (3) de canal a au moins par endroits une structure (6) rainurée ayant des peignes (9) formant des rainures qui sont à distance les uns des autres.

3. Turbine (1) à vapeur suivant la revendication 2, **caractérisée en ce que** chaque aube (5) a une pale (51) d'aube ayant un contour (52) adjacent à la surface (31) d'intervalle et il est associé à chaque peigne (9) formant des rainures s'étendant sur la surface (31) d'intervalle un contour (52) de pale d'aube venant immédiatement ensuite et par rapport auquel le peigne (9) formant des rainures est dirigé à peu près dans le même sens.

4. Turbine (1) à vapeur suivant l'une des revendications précédentes, **caractérisée en ce qu'**une première partie des aubes (5) est réalisée sous la forme d'aubes (5B) mobiles.

5. Turbine (1) à vapeur suivant l'une des revendications précédentes, **caractérisée en ce qu'**une deuxième partie des aubes (5) est réalisée sous la forme d'aubes (5A) directrices.

6. Turbine (1) à vapeur suivant l'une des revendications précédentes, **caractérisée en ce que** certaines des aubes (5) ont respectivement une partie (56) de pied, partie (56) de pied par laquelle elles sont insérées dans une gorge (14A), faisant le tour et commune à toutes les aubes (5), d'un rotor (14) ou d'une enveloppe (15), ces aubes (5) étant contiguës par leurs parties (56) de pied.

7. Turbine (1) à vapeur suivant l'une des revendications précédentes, **caractérisée en ce que** l'une des aubes (5) est adaptée dans une gorge (14A), conçue seulement pour une aube (5) unique, d'un rotor (14) ou d'une enveloppe (15).

8. Turbine (1) à vapeur suivant l'une des revendications précédentes, **caractérisée en ce qu'**une partie des aubes (5) sont reliées les unes aux autres en un ensemble, notamment par soudage ou par usinage par érosion de ces aubes (5) dans une pièce compacte, de sorte que chacune de ces aubes (5) ne peut être détachée de l'ensemble que par destruction.

9. Turbine (1) à vapeur suivant l'une des revendications précédentes, **caractérisée en ce que** la distance (w) entre des peignes (9) voisins formant rainures est comprise entre 0,01 mm et 10 mm.

10. Turbine (1) à vapeur suivant l'une des revendications précédentes, **caractérisée en ce que** respectivement deux peignes (9) voisins formant rainures incluent un fond (10) de rainure et forment une rainure, la profondeur (h) de chaque rainure (8) mesurée d'une ligne de liaison entre les peignes (9) formant rainures au point le plus bas du fond (10) de la rainure étant comprise entre 1 µm et 1 mm.

11. Aube (5) dirigée le long d'un axe (57) d'aube pour une turbine à vapeur, qui a une surface (49) d'aube comprenant une partie (56) de pied qui a une partie (56A) de fixation destinée à la fixation dans la turbine à vapeur et une pale (51) d'aube adjacente à la partie (56) de pied, pale qui a une surface (51) de pale d'aube ayant une zone (41) de pied venant à la suite le long de l'axe (57) de l'aube, une zone (42) médiane et une zone (43) de tête, **caractérisée en ce que** la surface (49) d'aube a une structure (6) nervurée ayant des peignes (9) formant nervures qui sont à distance les uns des autres et par lesquels un contournement de la surface (49) des aubes par un fluide (11) d'action peut être influencé de manière délibérée, la structure rainurée s'étendant dans la zone (41) de pied et dans la zone (43) de tête et la structure étant lisse dans la zone (42) médiane.

12. Aube (5) suivant la revendication 11, **caractérisée en ce que** chaque peigne (9) formant rainures s'étend dans un premier angle (α) d'étendue dans un plan perpendiculaire à l'axe (57) de l'aube et il est prévu un premier peigne (9a) formant rainures ayant un premier angle (α1) d'étendue et un deuxième peigne (9b) formant rainures ayant un deuxième angle (α2) d'étendue.

13. Aube (5) suivant la revendication 12, **caractérisée en ce que** le premier peigne (9a) formant rainures se trouve dans une zone de la partie (56) de pied ou dans la zone (41) de pied et le premier angle (α1) d'étendue est compris entre 0° et 20°.

14. Aube (5) suivant la revendication 12 ou 13, **caractérisée en ce que** le deuxième peigne (9b) formant rainures se trouve dans la zone (43) de tête, le deuxième angle (α2) d'étendue étant compris entre 20° et 60°.

15. Aube (5) suivant l'une des revendications 11 à 14, **caractérisée en ce que** la partie (56) de pied a une surface de partie de pied sur laquelle la structure (6) rainurée s'étend au moins en partie.

16. Aube (5) suivant l'une des revendications 11 à 15, **caractérisée en ce qu'**une partie (54) de tête, opposée le long de l'axe (57) de l'aube à la partie (56) de pied, est munie d'une surface de partie de tête sur laquelle la structure (6) rainurée s'étend au moins en partie, le deuxième peigne (9b) formant rainures se trouvant notamment dans la surface de la partie de tête.

17. Aube (5) suivant l'une des revendications 11 à 16, **caractérisée en ce que** la distance (w) entre des peignes (9) voisins formant rainures est comprise entre 0,01 mm et 10 mm.

18. Aube (5) suivant l'une des revendications 11 à 17, **caractérisée en ce que** respectivement deux peignes (9) voisins formant rainures incluent un fond (10) de rainure et forment une rainure (8), la profondeur de chaque rainure, mesurée d'une ligne de liaison entre les peignes (9) formant rainures au point le plus bas du fond (10) de la rainure, étant comprise entre 1 µm et 1 mm.
